# EUROPÄISCHE PATENTANMELDUNG

(11) **EP 2 233 751 A2**
(43) Veröffentlichungstag der Anmeldung: **29.09.2010**
(21) Anmeldenummer: 10157149.5
(22) Anmeldetag: 22.03.2010
(51) Int. Cl.: F15B 15/14

(54) **Druckmittelzylinder mit optimierter Kolbenführung**

(30) Priorität: 24.03.2009 DE 102009001770
(71) Anmelder: ZF Friedrichshafen AG, 88038 Friedrichshafen (DE)
(72) Erfinder: Gebauer, Dieter, 97502, Obbach (DE)

(57) **Zusammenfassung**

Es wird ein Druckmittelzylinder (10) einer hydraulischen Betätigungseinrichtung, insbesondere zur Betätigung einer Kraftfahrzeugkupplung beschrieben, umfassend ein Gehäuse (12) mit einem Druckanschluss und mit einer darin ausgebildeten Laufbuchse (16), weiter umfassend einen Kolben (18), der mit dessen Außenumfangsfläche in der Laufbuchse (16) längsverschieblich geführt ist und der einen variablen Druckraum begrenzt, eine im Gehäuse (12) angeordnete Dichtung (36), die zur Abdichtung des Druckraumes (32) mit der Außenumfangsfläche des Kolbens (18) zusammenwirkt, wobei die Laufbuchse (16) durch die Dichtung (36) in einen druckraumseitigen ersten Laufbuchsenabschnitt (16a) und in einen außerhalb des Druckraums (32) angeordneten zweiten Laufbuchsenabschnitt (16b) unterteilt ist. Zur Verminderung vibrationsbedingter Verschleißerscheinungen wird vorgeschlagen, dass die Außenumfangsfläche des Kolbens (18) eine mit der Dichtung (36) zusammenwirkende Dichtfläche (20a) und einen mit dem zweiten Laufbuchsenabschnitt (16b) zusammenwirkenden und radial über die Dichtfläche (20a) überstehenden Führungsabschnitt (20c) aufweist.

## Beschreibung

Die Erfindung betrifft einen Druckmittelzylinder gemäß dem Oberbegriff des Patentanspruchs 1.

Ein gattungsgemäßer Druckmittelzylinder ist beispielsweise in der DE 10 2006 055 225 A1 der Anmelderin offenbart und findet als Stellzylinder eines hydraulischen Kupplungs- oder Bremssystems in Fahrzeugen Verwendung. Bei einem solchen System stehen gewöhnlich zwei Hydraulikzylinder, von denen einer als Geber- und der zweite als Nehmerzylinder arbeitet, über eine diese verbindende Hydraulikleitung miteinander in Fluidverbindung und bilden einen gemeinsamen Druckraum aus. Zur Erhöhung der Standfestigkeit eines solchen Hydraulikzylinders gegenüber innerhalb des Druckraums eingeschlossenen Fremdpartikeln wird dort vorgeschlagen, einen innerhalb des Druckraumes gelegenen inneren Laufbuchsenabschnitt gegenüber einem außerhalb des Druckraums angeordneten äußeren Laufbuchsenabschnitt mit einem größeren Innendurchmesser auszuführen. Auf diese Weise wird im Druckraum zwischen der Lauffläche des Kolbens und dem dort radial gegenüberliegenden Laufbuchsenabschnitt ein Ringraum geschaffen, dessen Erstreckung von der Stellung des Kolbens im Druckraum abhängt. Dieser Ringraum ist in radialer Richtung so dimensioniert, dass sich innerhalb des Druckraumes befindliche Fremdpartikel in diesem frei bewegen können und sich nicht zwischen dem Kolben und dem druckraumseitigen Laufbuchsenabschnitt verklemmen können. Die am Gehäuse angeordnete Dichtung liegt kolbenseitig dichtend, d.h. spaltfrei an, so dass dort ggf. auftretende Fremdpartikel bei einer Bewegung des Kolbens von der Dichtung abgestreift werden können.

Obgleich mit dem in der DE 10 2006 055 225A1 vorgeschlagenen Druckmittelzylinder eine spürbare Erhöhung der Standfestigkeit gegenüber im Druckraum befindlicher Fremdpartikel erzielbar ist, kann bei solch einem Zylinder dennoch ein Verschleiß der Kolbenlauffläche infolge weiterer Schadensmechanismen auftreten. So treten beispielsweise durch hochfrequente Vibrationen des Verbrennungsmotors angeregte Relativbewegungen zwischen dem außerhalb des Druckraums liegenden Laufbuchsenabschnitt und der in diesem geführten Kolbenlauffläche auf. Das Zylindergehäuse und ggf. eine als Laufbuchsenabschnitt dienende Führungshülse sind in einer bekannten Bauart aus einem glasfaserverstärkten Polyamidwerkstoff mit einem hohen Verschieißwiderstand gefertigt. Somit wird ein Abrieb bevorzugt an der mit der Dichtung zusammenwirkenden Kolbenlauffläche erzeugt, der sich insbesondere im Bereich der Dichtung akkumuliert und diese allmählich aufraut, was wiederum eine Schädigung der Dichtung zur Folge hat und schließlich zu einer Leckage des Druckmittelzylinders führen kann.

Von dem erläuterten Problem ausgehend, stellt sich die Erfindung die Aufgabe, einen Hydraulikzylinder mit einer verbesserten Standfestigkeit gegenüber von eingeprägten Vibrationen bereitzustellen.

Das genannte Problem wird bei einem gattungsgemäßen Druckmittelzylinder durch die im Kennzeichen von Patentanspruch 1 genannten Merkmale gelöst.

Es wird somit ein Druckmittelzylinder für eine hydraulische Betätigungseinrichtung, insbesondere zur Betätigung einer Kraftfahrzeugkupplung, vorgeschlagen, welcher zunächst ein Gehäuse mit einem Druckanschluss und mit einer darin ausgebildeten Laufbuchse aufweist, In der Laufbuchse ist längsverschieblich mittels dessen Außenumfangsfläche ein Kolben geführt, der dadurch einen variablen Druckraum begrenzt. Der Zylinder weist weiter eine im Gehäuse festgelegteDichtung auf, die zur Abdichtung des Druckraumes mit der Außenumfangsfläche des Kolbens zusammenwirkt. Die Laufbuchse wird durch die Dichtung in einen druckraumseitigen ersten Laufbuchsenabschnitt und in einen außerhalb des Druckraums angeordneten zweiten Laufbuchsenabschnitt unterteilt.

Der Druckmittelzylinder gemäß der vorliegenden Erfindung zeichnet sich dadurch aus, dass die Außenumfangsfläche des Kolbens eine mit der Dichtung zusammenwirkende Dichtfläche und einen mit dem zweiten Laufbuchsenabschnitt zusammenwirkenden und radial über die Dichtfläche überstehenden Führungsabschnitt aufweist.

Der Erfindung liegt die Überlegung zugrunde, die Wirkungsfläche zwischen der Außenumfangsfläche des Kolbens und dem außerhalb des Druckraums befindlichen Laufbahnabschnitt des Zylinders zu reduzieren, um dadurch die nachteiligen Folgen von auftretenden Vibrationen zu verringern. Durch die Ausbildung eines Führungsabschnittes am Kolben werden an der Außenwandung des Kolbens die Führungs- und Dichtfunktion voneinander getrennt. Hierbei erfolgt die Kolbenführung außerhalb des Druckraums durch einen mit dem zweiten Laufbuchsenabschnitt zusammenwirkenden Führungsabschnitt, welcher an dem, dem Druckraum abgewandten und durch die Wirkungslänge des Kolbens definierten definierten Endbereich ausgebildet ist. Der Führungsabschnitt übernimmt damit die Abstützung des Kolbens infolge der bei der Betätigung auftretenden Kippmomente. Die mit der Dichtung zusammenwirkende Dichtfläche des Kolbens schließt mit dem zweiten Laufbuchsenabschnitt einen sich in Axialrichtung erstreckenden Radialspalt ein, der so bemessen ist, dass selbst unter dem Einfluss von betriebsbedingten Vibrationen keine großflächige Anlage der radial benachbarten Teile auftritt. Es hat sich gezeigt, dass bereits ein radialer Überstand des Führungsabschnittes gegenüber der Koibendichtfiäche von wenigen Zehntel Millimeter, insbesondere im Bereich von etwa 0,3-0,8 mm genügt, um die Lebensdauer des Druckmittelzylinders gegenüber einem vibrationsbedingten Abrieb zu erhöhen. Bevorzugt kann der Führungsabschnitt im Vergleich zur Länge des Kolbens axial sehr kurz als Scheibe oder als Ringkragen mit einer Länge von wenigen Millimetern, z.B. 3 - 5mm, in Umfangsrichtung geschlossen oder in Form einzelner am Umfang beabstandeter Segmente am Kolben ausgeführt sein.

Vorteilhafte Weiterbildungen und Ausgestaltungen der Erfindung sind in den abhängigen Ansprüchen angegeben.

Gemäß einem ersten vorteilhaften Ausführungsbeispiel ist der Führungsabschnitt als Einsatzteil, insbesondere als ein scheiben- oder ringförmiges Kunststoffeinsatzteil, ausgeführt, welches einfach an dem, dem Druckraum abgewandten Ende des Kolbens eingesetzt wird. Das Einsatzteil kann aus einem anderen Werkstoff als der Kolben gefertigt sein. Es ist günstig, für das Einsatzteil einen gegenüber dem Kolben und dessen Dichtfläche weniger stark gefüllter Werkstoff zu verwenden. Eine Optimierung kann dahingehend erfolgen, dass der Kolben kann aus relativ dichten Werkstoff, z.B. aus Duroplast, zum bestmöglichen Zusammenwirken mit der Dichtung hergestellt wird, während für das Einsatzteil ein abweichender Werkstoff zum optimalen Zusammenwirken mit dem zweiten Laufbuchsenabschnitt ausgewählt wird, z.B. ein Thermoplast ohne Faserzusätze, z.B. PA 66 oder ein gleitmodifizierter Thermoplastwerkstoff, z.B. PA 66 PTFE. Auf diese Weise kann die zwischen dem zweiten Laufbuchsenabschnitt und dem Einsatzteil auftretende Reibung und der dadurch erzeugte Abrieb noch weiter reduziert werden.

Gemäß einer darauf aufbauenden Weiterbildung des erfindungsgemäßen Druckmittelzylinders weist der Kolben einen an diesem verschwenkbeweglich gelagerten Stößel auf, welcher von dem Einsatzteil aufgenommen ist. An dem Einsatzteil kann dazu eine Kugelschale vorgesehen sein, weiche eine am Stößel ausgebildete Kugelkalotte aufnimmt. Auch hierbei kann zur Erniedrigung der wirkenden Reibung die Werkstoffpaarung der Verbindungspartner reibungsoptimiert realisiert werden.

Gemäß einer besonders einfach zu montierenden Variante ist das Einsatzteil als Einlegeteil ausgeführt, welches zwischen dem Kolben und dessen Kolbenstange eingelegt ist und welches durch die Wirkung einer beispielsweise im Kolbendruckraum angeordneten Vorlastfeder permanent mit einer Kraft belastet wird und dadurch dessen Montageposition nicht verlassen kann. Zur Erleichterung der Montage kann das Einsatzteil mit einem geschlitzten Bund ausgeführt werden, um so durch Montageengstellen beispielsweise an einer Führungshülse eingeführt zu werden. Eine aufwändige Verbindungsgeometrie ist deshalb nicht erforderlich.

Zusätzlich zu dem außerhalb des Druckraums am Kolben befindlichen Führungsabschnitt kann an der Außenumfangsfläche des Kolbens auch ein mit dem ersten Laufbuchsenabschnitt zusammenwirkender und radial über die Dichtfläche überstehender Führungsabschnitt innerhalb des Druckraums vorgesehen sein. Dieser kann ebenfalls als Einsatzteil und hinsichtlich einer Optimierung der Gleiteigenschaften aus einem zum Kolben unterschiedlichen Werkstoff, wie zum dem außerhalb des Druckraums ausgebildeten Führungsabschnitt beschrieben, gefertigt sein.

Die beiden Laufbuchsenabschnitte des Druckmittelzylinders können beide an einem einzigen Gehäuseteil vorgesehen sein. Gemäß einer dem Fachmann geläufigen Bauart kann der zweite Laufbuchsenabschnitt jedoch auch an einer mit dem Gehäuse verbundenen Führungshülse ausgebildet sein.

Nachfolgend wird die Erfindung unter Bezugnahme auf die beigefügte Zeichnung beispielhaft erläutert. Es zeigen:
- Fig. 1: einen als Nehmerzylinder ausgeführten Druckmittelzylinder mit einer geteilten Laufbuchse und mit einem am Kolben angeordneten Einsatzteil;
- Fig. 2: einen vergrößerten Ausschnitt des in Fig. 1 gezeigten Druckmittelzylinders in einer teilweise eingefahrenen Kolbenstellung.

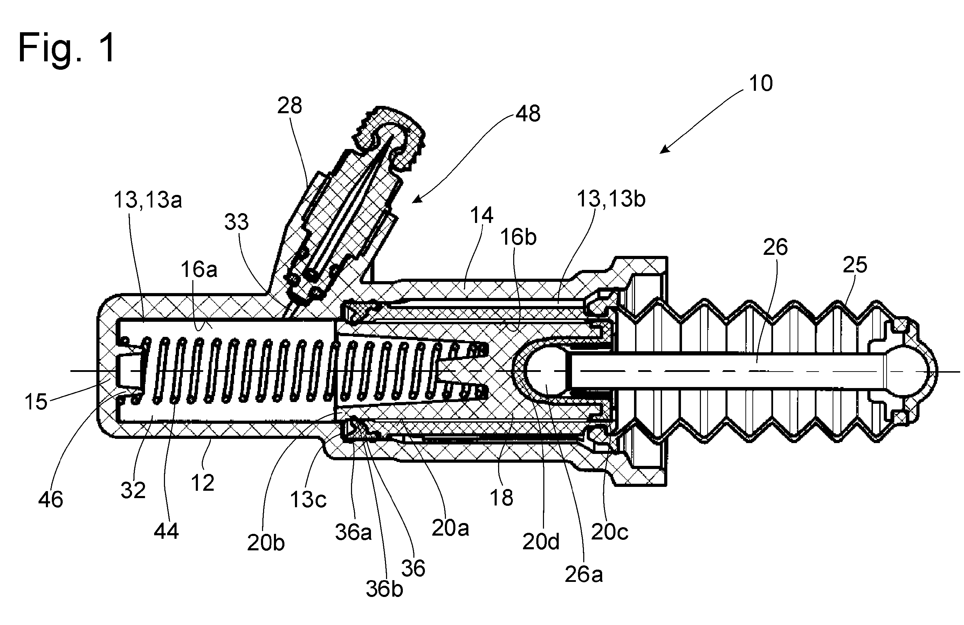

Fig.1 zeigt eine Axialschnittdarstellung eines erfindungsgemäßen Druckmittelzylinders 10, welcher als Nehmerzylinder für eine hydraulische Betätigungseinrichtung zur Betätigung einer Kraftfahrzeugkupplung ausgebildet ist. Der Nehmerzylinder 10 weist ein einseitig geschlossenes Kunststoff-Gehäuse 12 mit einer stufenförmigen zylindrischen Ausnehmung 13 auf, welche in einen an einen Gehäuseboden 15 angrenzenden Vorderabschnitt 13a und einen dazu mit einem erweiterten Durchmesser ausgeführten Hinterabschnitt 13b unterteilt ist. In dem Hinterabschnitt 13b ist eine mittels einer in der Figur nicht sichtbaren Rastverbindung fest mit dem Gehäuse 12 verbundene Führungshülse 14 eingesetzt. In dem Vorderabschnitt 13a ist ein erster Laufbuchsenabschnitt 16a und in der Führungshülse 14 ein zweiter Laufbuchsenabschnitt 16b ausgeführt, welche gemeinsam eine Laufbuchse 16 für einen in dem Zylinder 10 axial beweglichen Duroplast-Kolben 18 ausbilden. Der Kolben 18 des Nehmerzylinders 10 ist über einen verschwenkbeweglich an diesem gelagerten und von einem Faltenbalg 25 umgebenden Stößel 26 mit einem hier zeichnerisch nicht dargestellten Kupplungshebel oder einer Kupplungsgabel verbunden.

Das Gehäuse 12 umfasst weiterhin einen im Bereich des Bodens 15 seitlich angeordneten und hier verdeckten Fluidanschluss, der über eine dort anschließbare Fluidleitung mit einem ebenfalls zeichnerisch nicht dargestellten Geberzylinder in Fluidverbindung gebracht werden kann.

Von der Mantelfläche des Gehäuses 12 steht ferner seitlich ein weiterer Anschluss 28 mit einem im Kolbeninnenraum mündendem Stichkanal 33 einer Entlüftungseinrichtung 48 ab, über welche das hydraulische System entlüftet werden kann.

Der axial bewegliche Kolben 18 und die Innenwandung des Zylindergehäuses 12, insbesondere der Vorderabschnitt 13a der Stufenbohrung, definieren einen variablen Druckraum 32, welcher gegenüber dem druckfreien Raum abgedichtet ist. Dazu ist am Gehäuse 12, genauer an einem Absatz 13c der Stufenbohrung 13 eine Elastomerdichtung 36, insbesondere eine Ringlippendichtungen 36, angeordnet, die mit einer äußeren Dichtlippe 36a am Gehäuse 12 und mit einer inneren Dichtlippe 36b an einer Dichtfläche 20a des Kolbens 18 anliegt. Die Dichtung 36, die hier im unverformten Zustand vor deren Montage gezeigt ist, ist somit axial zwischen dem innerhalb des Druckraums 32 angeordneten ersten Laufbuchsenabschnitt 16a und dem außerhalb des Druckraums 32 angeordneten zweiten Laufbuchsenabschnitt 16b angeordnet.

Zusätzlich zu der sich am Kolben 18 von der dem Druckraum 32 abgewandten Seite her und fast über dessen gesamte Länge erstreckenden Dichtfläche 20a ist am druckraumseitigen Endbereich des Kolbens 18 eine innerer, ringkragenförmiger Führungsabschnitt 20b vorgesehen, der mit dem inneren Laufbuchsenabschnitt 16a zur Führung des Kolbens 18 innerhalb des Druckraums 32 zusammenwirkt.

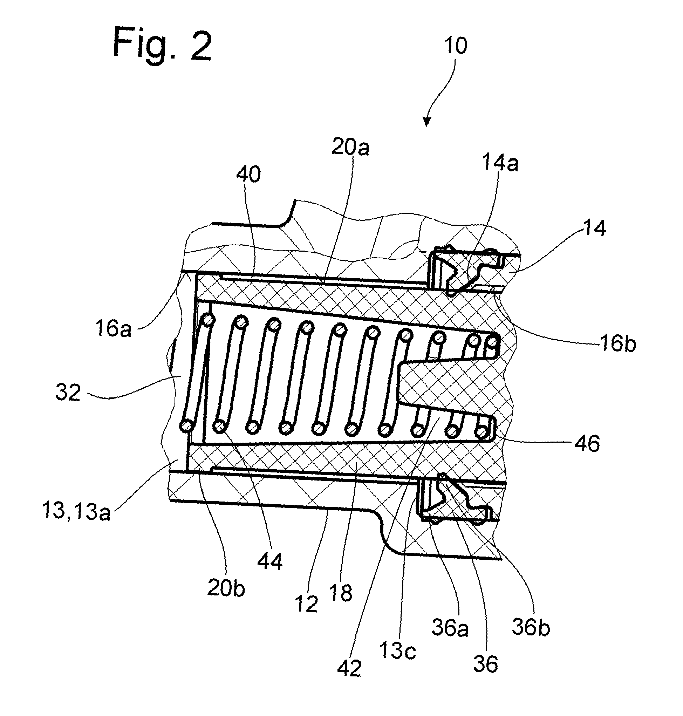

Fig. 2 zeigt einen Ausschnitt des Druckmittelzylinders der Fig. 1, wobei sich hier der Kolben 18 in einer teilweise eingefahrenen Stellung befindet und wobei auf die Darstellung der Entlüftungseinrichtung 48 verzichtet wurde. Es ist dort gut erkennbar, dass im Bereich der Dichtung 36 der von der Führungshülse 14 gebildete äußere Laufbuchsenabschnitt 16b einen optionalen Anlageabschnitt 14a zur besseren Anlage der Dichtung 36 aufweist. Dieser Anlageabschnitt 14a ist mit einem etwas kleineren Innendurchmesser als der innerhalb des Druckraumes 32 liegende innere Laufbuchsenabschnitt 16a ausgeführt. Es ist weiter erkennbar, dass innerhalb des Druckraumes 32 radial zwischen der Dichtfläche 20a des Kolbens 18 und dem inneren Laufbuchsenabschnitt 16a ein Ringraum 40 geschaffen ist. In diesen können zwar über optionale Ausnehmungen im Führungsabschnitt 20b Fremdpartikel eintreten, jedoch ist dieser Ringraum 40 radial so bemessen, dass sich Fremdpartikel frei darin bewegen können und ein Reibkontakt sowie eine Beschädigung der mit der Dichtung 36 zusammenwirkenden Kolbendichtfläche 20a sicher vermieden wird.

An dem Kolben 18 ist an der zu dem Druckraum 32 weisenden Kolbenfläche ein Ringraum 42 zur Aufnahme einer Druckfeder 44 angeformt, die sich mit einem Ende an dem Boden 15 des Innenzylinders 12 abstützt und sich dort an einem Ringfortsatz 46 zentrieren kann. Das gegenüberliegende Ende der Druckfeder 44 stützt sich an einer schmalen Ringfläche 46 des sich am Kolben 18 mit zunehmender Tiefe verjüngenden Ringraums 40 ab.

Mit Blick auf Fig. 1 ist weiter erkennbar, dass sich auf der drucklosen Seite des Zylinders 10 an die mit der Dichtung 36 zusammenwirkende Dichtfläche 20a des Kolbens 18 ein radial über die Dichtfläche 20a überstehender Führungsabschnitt 20c ausgebildet ist, welcher am Endbereich des Kolbens 18 mit dem zweiten Laufbuchsenabschnitt 16b zusammenwirkt. Dieser Führungsabschnitt 20c ist als KunststoffEinsatzteil, insbesondere als Einlegeteil ausgeführt und umfasst eine Kugelschale 20d zur Aufnahme einer Stößelkalotte 26a. Das Einsatzteil 20c wird durch die Wirkung der Druckfeder 44 und des den Stößel 26 in Anlage am Kolben 18 haltenden elastischen Faltenbalgs 25 an dessen Position festgelegt.
Die Außenumfangsfläche des Kolbens 18 umfasst somit die Dichtfläche 20a, den innerer Führungsabschnitt 20b und den äußeren Führungsabschnitt 20c.

Der innere und der äußere Laufbuchsenabschnitt 1 6a, b können zur Führung des Kolbens 18 den gleichen wirksamen Innendurchmesser aufweisen, was jedoch nicht zwingend ist. Es ist auch möglich, die Laufbuchsenabschnitte 16a, b mit unterschiedlichen Innendurchmessern auszuführen, was auch entsprechend unterschiedliche Außendurchmesser der inneren und äußeren Führungsabschnitte 20b, c bedingt.

Auch kann der innere Führungsabschnitt 20b als Einsatzteil mit einem vom Kolben 18 unterschiedlichen Werkstoff ausgeführt und zwischen dem Kolben 18 und der Druckfeder 44 angeordnet sein.

### Bezugszeichenliste

- 10: Druckmittelzylinder
- 12: Gehäuse
- 13: Stufenausnehmung
- 13a: Vorderabschnitt
- 13b: Hinterabschnitt
- 13c: Absatz
- 14: Führungshülse
- 14a: Anlageabschnitt
- 15: Gehäuseboden
- 16: Laufbuchse
- 16a: erster Laufbuchsenabschnitt
- 16b: zweiter Laufbuchsenabschnitt
- 18: Kolben
- 20a: Kolbendichtfläche
- 20b: innerer Führungsabschnitt
- 20c: äußerer Führungsabschnitt
- 25: Faltenbalg
- 26: Stößel
- 26a: Stößelkalotte
- 28: Entlüftungsanschluß
- 32: Druckraum
- 33: Stichkanal
- 36: Elastomerdichtung
- 36a: äußere Dichtlippe
- 36b: innere Dichtlippe
- 40: Ringraum
- 42: Ringraum
- 44: Druckfeder
- 46: Ringfortsatz
- 48: Entlüftungseinrichtung

## Patentansprüche

1. Druckmittelzylinder (10) einer hydraulischen Betätigungseinrichtung, insbesondere zur Betätigung einer Kraftfahrzeugkupplung, umfassend
- ein Gehäuse (12) mit einem Druckanschluss und mit einer darin ausgebildeten Laufbuchse (16),
- einen Kolben (18), der mit dessen Außenumfangsfläche in der Laufbuchse (16) längsverschieblich geführt ist und der einen variablen Druckraum (32) begrenzt,
- eine im Gehäuse (12) angeordnete Dichtung (36), die zur Abdichtung des Druckraumes (32) mit der Außenumfangsfläche des Kolbens (18) zusammenwirkt,
- wobei die Laufbuchse (16) durch die Dichtung (36) in einen druckraumseitigen ersten Laufbuchsenabschnitt (16a) und in einen außerhalb des Druckraums (32) angeordneten zweiten Laufbuchsenabschnitt (16b) unterteilt ist,
**dadurch gekennzeichnet,**
**dass** die Außenumfangsfläche des Kolbens (18) eine mit der Dichtung (36) zusammenwirkende Dichtfläche (20a) und einen mit dem zweiten Laufbuchsenabschnitt (16b) zusammenwirkenden und radial über die Dichtfläche (20a) überstehenden Führungsabschnitt (20c) aufweist.

2. Druckmittelzylinder nach Anspruch 1,
**dadurch gekennzeichnet, dass** der Führungsabschnitt (20c) als Einsatzteil ausgeführt ist.

3. Druckmittelzylinder nach Anspruch 2,
**dadurch gekennzeichnet, dass** der Kolben (18) einen an diesem verschwenkbeweglich gelagerten Stößel (26) aufweist, der von dem Einsatzteil (20c) aufgenommen ist.

4. Druckmittelzylinder nach einem der vorhergehenden Ansprüche,
**dadurch gekennzeichnet, dass** das Einsatzteil (20c) als Einlegeteil ausgeführt ist.

5. Druckmittelzylinder nach einem der vorhergehenden Ansprüche,
**dadurch gekennzeichnet, dass** der zweite Laufbuchsenabschnitt (16b) an einer mit dem Gehäuse (12) verbundenen Führungshülse (14) ausgebildet ist.

6. Druckmittelzylinder nach einem der vorhergehenden Ansprüche,
**dadurch gekennzeichnet, dass** der Kolben (18) einen mit dem ersten Laufbuchsenabschnitt (16a) zusammenwirkenden und radial über die Dichtfläche (20a) überstehenden Führungsabschnitt (20b) aufweist.
